## Europäisches Patentamt
## European Patent Office
## Office européen des brevets

(19)

(11) Numéro de publication: **0 254 620**
**A1**

(12) **DEMANDE DE BREVET EUROPEEN**

(21) Numéro de dépôt: 87401548.0

(22) Date de dépôt: 02.07.87

(51) Int. Cl.⁴: **G 02 B 6/04**
G 09 F 9/30

(30) Priorité: 07.07.86 FR 8609834

(43) Date de publication de la demande:
**27.01.88 Bulletin 88/04**

(84) Etats contractants désignés: **DE GB NL**

(71) Demandeur: **THOMSON-CSF**
**173, Boulevard Haussmann**
**F-75379 Paris Cédex 08 (FR)**

(72) Inventeur: **Broussoux, Dominique**
**THOMSON-CSF SCPI 19, avenue de Messine**
**F-75008 Paris (FR)**

**Micheron, François**
**THOMSON-CSF SCPI 19, avenue de Messine**
**F-75008 Paris (FR)**

**Staron, Alain**
**THOMSON-CSF SCPI 19, avenue de Messine**
**F-75008 Paris (FR)**

**Trotel, Jacques**
**THOMSON-CSF SCPI 19, avenue de Messine**
**F-75008 Paris (FR)**

(74) Mandataire: **Lincot, Georges et al**
**THOMSON-CSF SCPI 19, avenue de Messine**
**F-75008 Paris (FR)**

(54) **Dispositif d'adressage optique et son utilisation dans des dispositifs imageurs électrooptiques.**

(57) Le dispositif permet le déplacement de lignes lumineuses audessus de zones déterminées d'une surface et le repérage optique de ces zones. Il comprend un ou plusieurs guides de lumière (2) à diffusion latérale disposé parallèlement à la surface couplés par une extrémité à une source lumineuse (7) et à des moyens de commande (11) pour éclairer sélectivement chaque zone de la surface à l'aide d'au moins un guide de lumière (2).

FIG_1-A

EP 0 254 620 A1

## Description

Dispositif d'adressage optique et son utilisation dans des dispositifs imageurs électrooptiques

La présente invention concerne un dispositif d'adressage optique et son utilisation dans des dispositifs imageurs électrooptiques.

Elle s'applique notamment à la réalisation d'imageurs dans lesquels un adressage optique permet de révéler chaque pixel d'une image latente préalablement enregistrée soit, sous la forme d'un signal électrique soit, sous la forme d'un signal lumineux.

Elle s'applique également aux dispositifs d'affichage pour la présentation d'informations, et à la réalisation d'écrans de visualisation pour la constuction d'image dans les appareils d'imagerie médicale.

Les imageurs à adressage optique connus peuvent être classés en deux catégories qui sont déterminées par la manière physique dont chaque pixel d'une image enregistrée est révélé par l'imageur.

Suivant la première catégorie dont des descriptions peuvent être trouvées par exemple, dans les brevets US 4 446 365, US, 4 547 670 et DE 3 235 076, l'action d'une excitation optique de (lecture sur chaque pixel enregistré de l'image produit un signal électrique.

Dans ces imageurs, les charges électriques photoinduites à l'enregistrement sont conservées pour chaque pixel dans un dispositif photoconducteur possèdant une électrode bloquante. A la lecture il y a compensation des charges piégées à l'enregistrement par des charges photoinduites, ce qui entraine un courant dans le circuit de lecture proportionnel au nombre de charges compensées donc à l'intensité locale de l'image enregistrée.

Suivant la deuxième catégorie dont une description correspondante peut être trouvée dans le brevet brevet européen no 0 138 024 l'image latente mémorisée au cours de l'enregistrement, est révélée directement sous la forme de signaux optiques par l'action des dispositifs d'adressage.

Comme dans ces imageurs, le support d'enregistrement de l'image a la forme d'un plan sur lequel repose la matrice des pixels de l'image enregistrée, l'adressage mis en oeuvre est un adressage cartésien suivant les directions X et Y des lignes et colonnes de l'organisation matricielle, et la lecture de chaque pixel est effectué par le balayage d'un mince pinceau de lumière qui éclaire chaque pixel situé au croisement d'une ligne et d'une colonne de la matrice dans une direction normale à ce plan. Ce mode d'adressage et de lecture qu'il soit effectué, directement par un faisceau laser défléchi en X et Y à l'aide de miroirs, ou indirectement à l'aide d'une fibre optique disposée dans une direction normale au plan matriciel et déplacé en X et Y en face de chaque pixel de la matrice, est contraignant à la fois au plan de la conception, car il conduit à des réalisations volumineuses, et au plan des performances, à cause des dispositifs électromécaniques mis en oeuvre qui sont par nature limités dans leur vitesse de déplacement.

Le but de l'invention est de pallier les inconvénients précités.

A cet effet, l'invention a pour objet, un dispositif d'adressage optique permettant le déplacement de lignes lumineuses au-dessus de zones déterminées d'une surface et le repérage optique de ces zones caractérisé en ce qu'il comprend un ou plusieurs guides de lumière à diffusion latérale disposés parallèlement à la surface couplés par une extrémité à une source lumineuse et à des moyens de commande pour éclairer sélectivement chaque zone de la surface à l'aide d'au moins un guide de lumière.

D'autres caractéristiques et avantages de l'invention apparaîtront ci-après à l'aide de la description faite en regard des dessins annexés qui représentent :

- Les figures 1A, 1B et 1C des modes de réalisation différents de dispositifs d'adressage selon l'invention ;

- Les figures 2A et 2B des modes de réalisation d'un dispositif d'adressage selon l'invention animé d'un mouvement de translation.

- La figure 3 une application du dispositif selon l'invention à l'adressage optique par nappe d'un dispositif imageur à photoconducteur.

- La figure 4 une application du dispositif selon l'invention à l'adressage optique par nappe d'un dispositif imageur utilisant un scintillateur à mémoire.

- La figure 5 un dispositif d'affichage utilisant des fibres optiques à diffusion latérale.

- La figure 6 un exemple de réalisation d'une enseigne lumineuse.

- La figure 7 un ruban de fibre à diffusion latérale utilisé pour le balisage.

- La figure 8 un écran de visualisation utilisant un réseau de fibres à diffusion latérale organisé en nappe adressé avec un dispositif d'adressage selon l'invention.

- La figure 9 une organisation en faisceau de fibres optiques à diffusion latérale muni d'un dispositif d'adressage selon l'invention pouvant être utilisé en décoration.

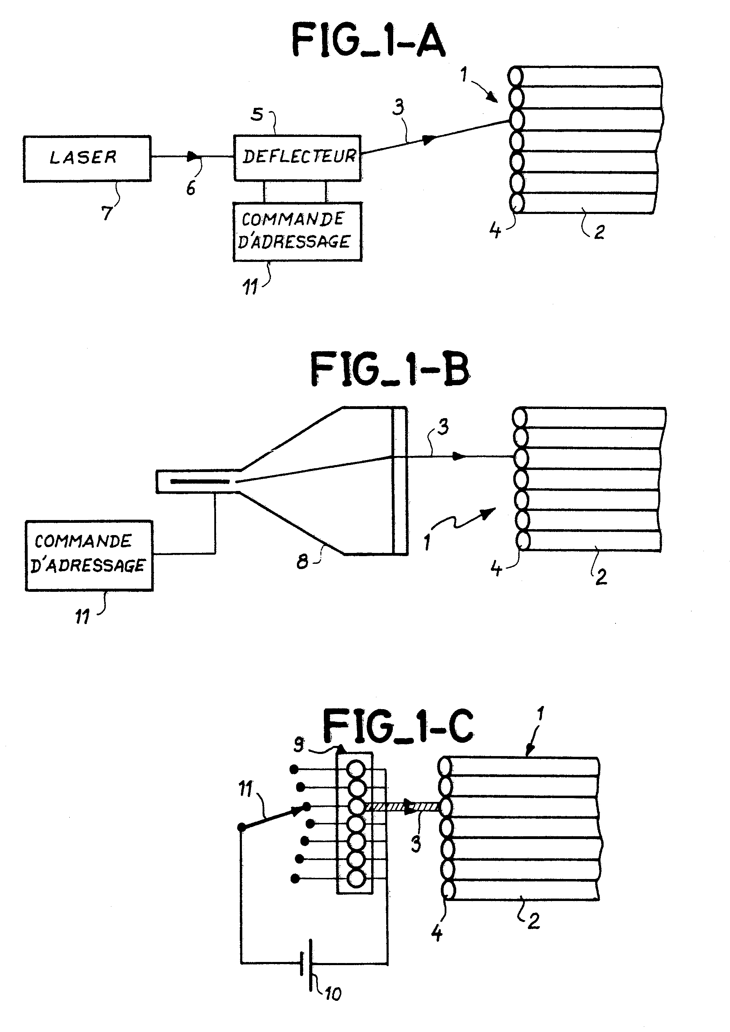

Les dispositifs d'adressage selon l'invention qui sont représentés aux figures 1A, 1B et 1C sont constitués par des nappes 1 de guides de lumière formés par des fibres optiques à diffusion latérale contrôlée 2 disposées parallèlement les unes aux autres dans un même plan. Ces fibres sont excitées séparément par un faisceau optique 3 déplaçable devant chacune des entrées de lumière 4 des fibres 2 situées à une de leurs extrémités. L'excitation sélective de chacune des fibres 2 d'une nappe 1 est obtenue sur la figure 1A par un déflecteur 5 qui dévie un faisceau lumineux 6 émis par une source de lumière laser 7. Elle est obtenue sur la figure 1B par un dispositif de déflection d'un spot lumineux émis par un écran cathodique 8 de type encore connu sous la désignation anglo-saxonne "Flying spot" et sur la figure 1C par une barette ou matrice 9 d'émetteur lumineux polarisée par une source d'alimentation électrique 10. Dans les trois cas représentés l'excitation sélective est commandée par des moyens de commande 11.

Pour permettre un bon fonctionnement des dispositifs d'adressage optique représentés, les fibres optiques 2 pourront être des fibres en matière plastique, en polyméthacrylathe de méthyle connues sous l'abréviation PMMA ou en polysthyrène connues sous l'abréviation PS dont les taux de diffusion latérale le long de leur surface comprise entre leurs deux extrémités peut atteindre des niveaux importants et dont la diffusion normale peut encore être augmentée en modifiant par exemple la structure des fibres dans une ou plusieurs zones voisines de leur surface pour provoquer lorsqu'une fibre est parcourue par un rayon lumineux, d'une part, des réflexions multiples qui viennent contrarier le cheminement de la lumière et d'autre part, la sortie des rayons lumineux au travers de l'élément de la surface de la fibre recouvrant la zone modifiée.

Pour obtenir cette modification de structure plusieurs procédés mécaniques, physico-chimiques ou chimiques pourront d'ailleurs être mis en oeuvre indépendamment les uns des autres ou éventuellement de façon complémentaire. Au plan mécanique la modification de structure pourra Rtre obtenue par exemple, pour les fibres à coeur gainé, en effectuant une réduction locale de l'épaisseur de la gaine entourant le coeur, par grattage, rainurage ou tout procédé mécanique équivalent ou encore, en modifiant la façon irréversible la section de la fibre, éventuellement, par laminage.

Au plan physico-chimique, on pourra inclure dans le coeur de la fibre au moment de sa fabrication des éléments en poudre solide, métalliques, abrasifs etc... ou encore mélanger dans la zone de diffusion des polymères non miscibles comme par exemple, du polystyrène avec du polyméthacrylate de méthyle.

Et au plan chimique, la surface de la fibre recouvrant la zone de diffusion pourra être attaquée à l'aide d'un solvant.

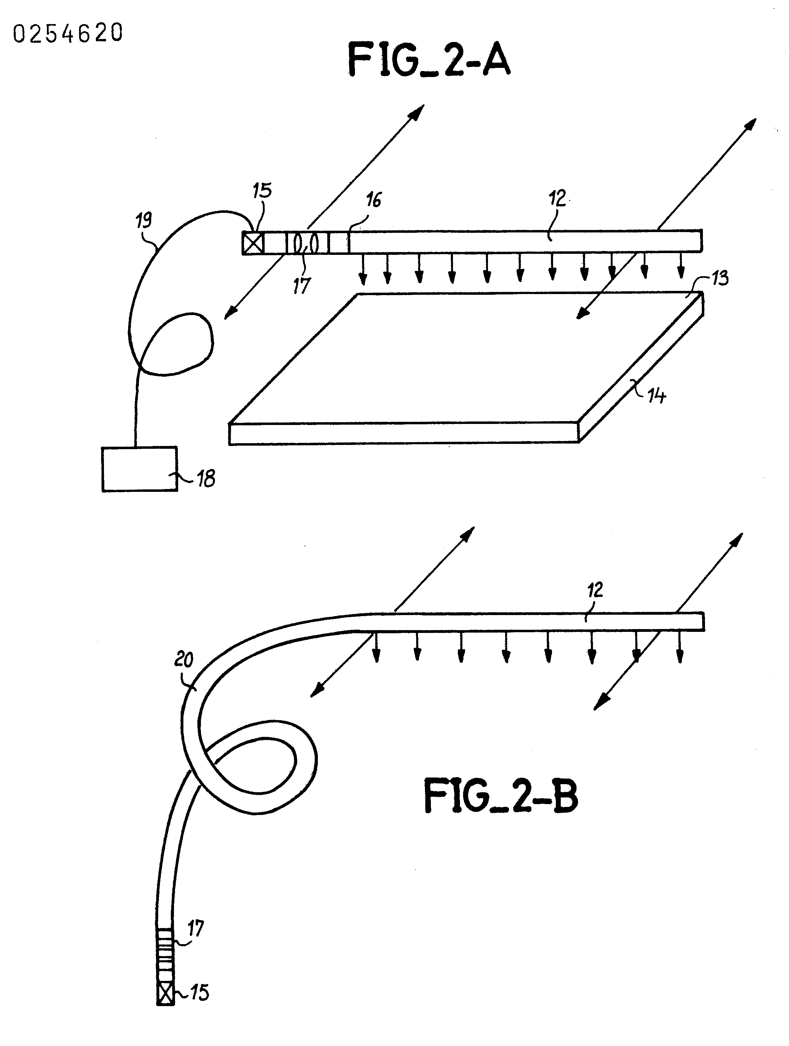

Plutôt que d'utiliser des fibres optiques organisées en nappe une autre variante de réalisation du dispositif d'adressage selon l'invention qui est représentée à la figure 2, consiste à n'utiliser qu'une seule fibre optique à diffusion latérale contrôlée déplaçable mécaniquement au-dessus d'une surface pour éclairer des zones déterminées de cette surface.

Sur la figure 2A, une seule fibre optique 12 est entraînée dans un mouvement de translation parallèlement à une surface plane 13 d'un objet 14. Une source de lumire 15 est couplée à une extrémité 16 de la fibre 12 à l'aide d'un coupleur optique 17. Une source électrique 18 alimente en énergie la source de lumière 15 au moyen d'un cordon d'alimentation 19.

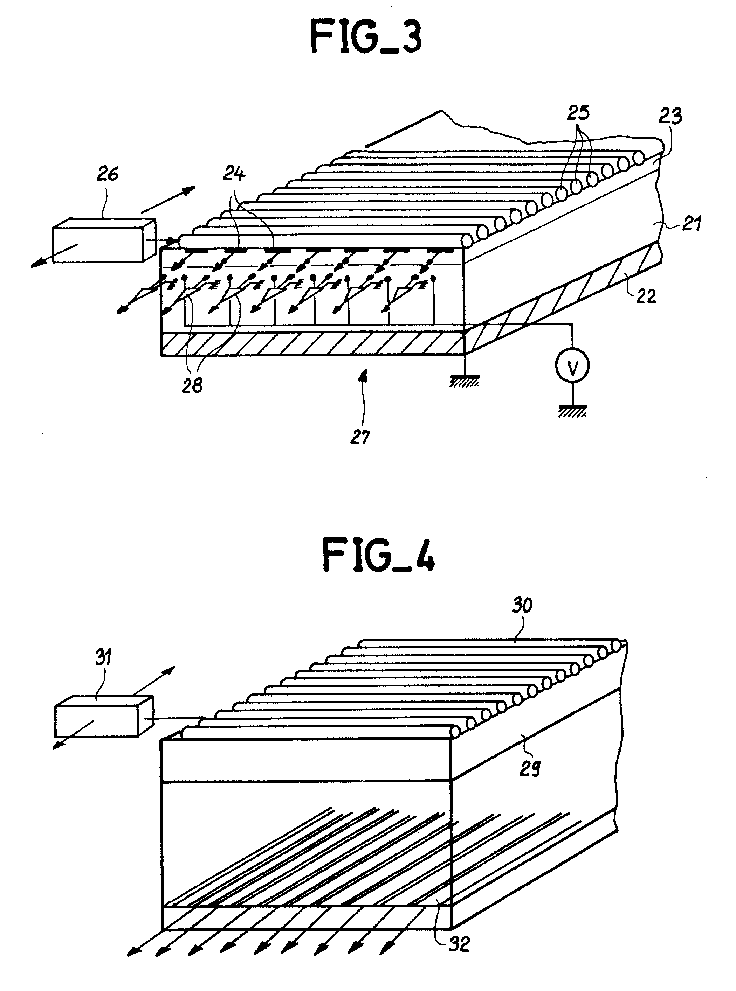

Dans le dispositif de la figure 3A, la source de lumière 15 est entraînée avec la fibre 12 mais on pourra également prévoir de laisser fixe la source de lumire 15 et le coupleur optique 17 en prévoyant un couplage optique souple 20 pour relier la partie utile 12 de la fibre au coupleur optique 17, ce couplage pouvant être réalisé pour la partie non active de la fibre qui devra avoir un mou suffisant pour permettre les déplacements de la partie utile 12 de la fibre.

Un exemple d'utilisation d'un dispositif d'adressage selon l'invention pour la réalisation d'un imageur à photoconducteur est représenté à la figure 3.

Dans cet exemple un matériau photoconducteur 21 est déposé sur une électrode uniforme 22, transparente au rayonnement à imager, et portée à un potentiel de zéro volt. Sur le matériau photoconducteur 21 est déposé une couche diélectrique uniforme 23. Des électrodes colonnes 24, transparentes au rayonnement de lecture, sont déposées en bandes sur la couche diélectrique 23, dont la largeur est celle d'un pixel. Une nappe de fibres optiques à diffusion latérale 25 est placée au-dessus du plan formé par les électrodes colonnes 24, les fibres 25 étant perpendiculaires aux électrodes 24, constituant ainsi l'ensemble des lignes. Bien que dans cet exemple, les fibres 25 peuvent être sélectionnées optiquement par l'un des procédés décrits précédemment à l'aide des figures 1A, 1B et 1C, dans le cas de la figure 3 elles sont adressées par le déplacement d'une source lumineuse 26.

A l'enregistrement, l'image est projetée sur l'imageur, toutes les colonnes étant soumises au même potentiel V à l'aide d'inverseurs 27 placés sur les électrodes colonnes 24, et la source optique de lecture 26 étant éteinte.

A la lecture, les électrodes colonnes 24 sont connectées à des amplificateurs de lecture 28 et la source lumineuse 26 adresse chacune des fibres disposées en lignes. Les amplificateurs de lecture 28 fournissent alors en parallèle les signaux correspondants successivement à chaque ligne adressée.

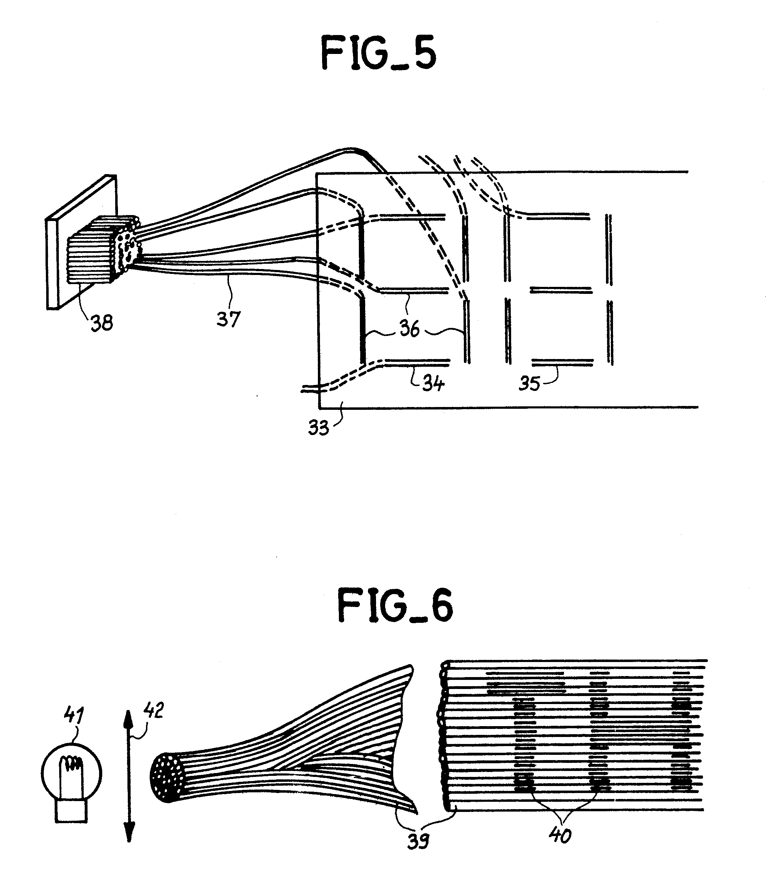

Un exemple d'utilisation d'un dispositif d'adressage selon l'invention pour la réalisation d'imageur à photoconducteur dont l'image latente est révélée par émission lumineuse est représenté à la figure 4.

Dans cet exemple un plan scintillateur 29 à mémoire stimulé optiquement est en contact avec un nappe 30 de fibres à diffusion latérale contrôlée, lesquelles peuvent être sélectionnées optiquement par l'une quelconque des procédés décrits précédemment aux figures 1A, 1B et 1C ou par translation d'une source unique 31 comme cela est représenté à la figure 4. L'autre face du scintillateur 29 est couplée optiquement à des bandes de photodétecteurs colonnes 32.

A l'enregistrement, le scintillateur 29 est soumis à l'image à enregistrer, éventuellement en dehors de l'espace occupé par la nappe 30 des fibres, si par exemple les fibres ne sont pas transparentes à la longueur d'onde d'enregistrement.

A la lecture, les fibres optiques de la nappe 30 sont adressées successivement par la source optique 31. Les photodétecteurs de plan 32 fournissent alors en parallèle les signaux correspondants aux lignes successivement adressées.

Un exemple d'un dispositif d'adressage selon l'invention pour la réalisation d'un afficheur est représenté à la figure 5.

L'afficheur représenté comprend un substrat 33 sur lequel sont fixés, par collage ou encastrage, des motifs 34, 35 composés de sept parties, chacune d'elles 36 étant constituée par une fibre optique à diffusion latérale.

Ces fibres 36 sont disposées de sorte que leur position dans le motif permette d'inscrire les chiffres de 0 à 9 ou les lettres de l'alphabet de A à Z. Les motifs sont rangés dans le plan en lignes et en colonnes suffisamment nombreuses, afin de composer, si nécessaire, des mots, des phrases ou des messages.

Les dimensions des motifs 34, 35 peuvent être ajustées selon les besoins suivant des dimensions comprises entre quelques mm à quelques cm, par un rainurage approprié du substrat 33 et un diamtère de fibre choisi. Les parties non diffusantes 37 des fibres sortent par la face arrière de l'afficheur et sont rangées de telle sorte qu'elles permettent l'adressage.

L'adressage optique peut être fait par une matrice codée de diodes électroluminescentes 38 ou par un "flying spot". Chaque position du spot étant rafraichie à une fréquence > A50Hz pour éviter le phénomène de "flickering" ou scintillement. Un message mobile peut être diffusé en modifiant, au cours du temps, l'intensité de la )lumière entrant dans chacune des fibres.

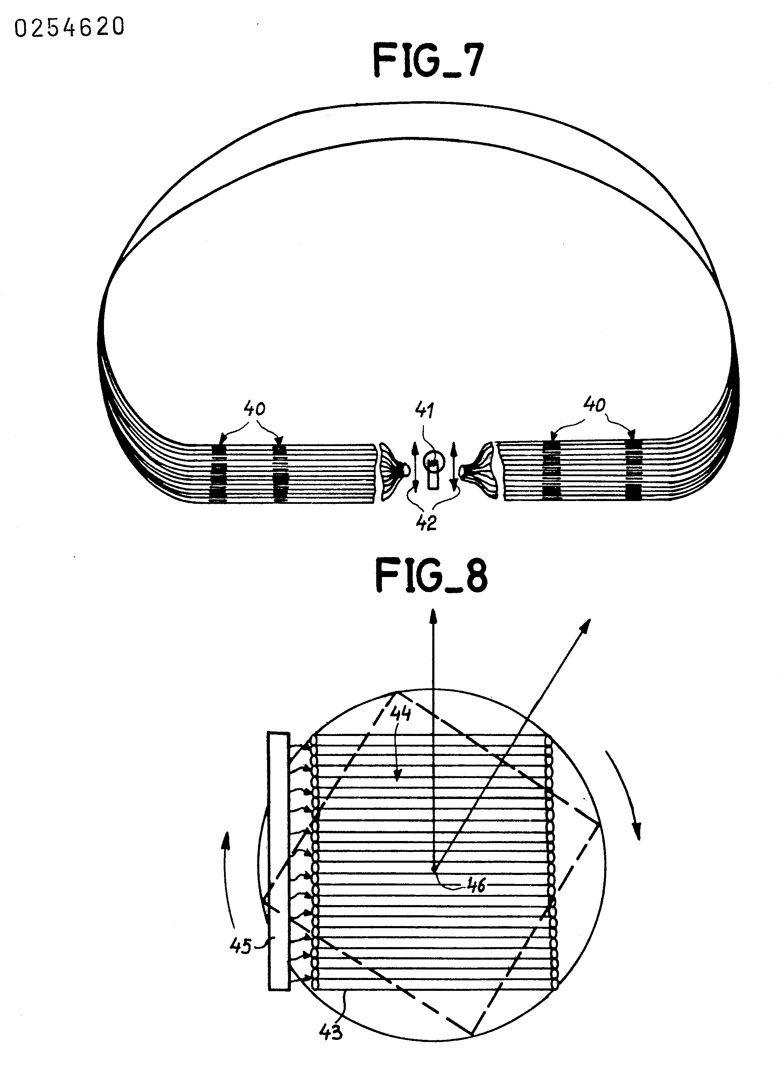

Des exemples d'utilisation d'un dispositif d'adressage selon l'invention pour la réalisation d'une enseigne lumineuse ou d'un systme de balisage sont représentés aux figures 6 et 7.

Sur la figure 6 l'enseigne représentée se compose d'un ruban de fibres 39 dont le nombre varie suivant les dimensions de l'enseigne. Les lettres ou les chiffres composant le message sont, par exemple, inscrits sur le ruban par des rainurages 40 locaux de chacune des fibres.

Dans le cas de la balise représentée à la figure 7, les plages lumineuses 40 sont créées simultanément par zones sur toutes les fibres du ruban 39. Dans les deux modes de réalisation précédents, les fibres sont naturellement excitées par une source lumineuse 41 par l'intermédiaire de condensateurs 42.

Un exemple d'utilisation d'un écran de visualisation composé de fibres en rotation est représenté à la figure 8.

Dans cet exemple chaque fibre 43, d'un réseau 44 de fibres parallèles arrangées dans un même plan, représente une ligne d'un écran à laquelle on associe une excitation lumineuse 45 produite par un laser ou une diode électroluminescente en bout de fibre.

Le réseau est constitué de N fibres 43 et la reconstruction de l'image est faite par rotation de l'ensemble autour d'un axe de rotation 46 normal au plan de la figure par pas élémentaires angulaires successifs.

Au cours de la rotation, le réseau 44 de fibres 43 prend P positions angulaires différentes. A chacune de ces positions correspond un ensemble de N excitations pour les N fibres du réseau.

Avec des excitations convenablement choisies, ce dispositif permet de visualiser une image de plus ou moins bonne qualité, suivant la valeur de P($1 < P < N$).

En choisissant $P = N$ on obtient une très bonne image équivalente à celle que l'on obtiendrait avec une résolution de N × N points.

Ce principe naturellement suppose que le détecteur d'image associé à l'écran est capable de faire une intégration.

Cependant dans le cas d'un écran, il faut considérer que le détecteur est l'oeil, dont la période d'intégration est > 40ms. Dans ce cas, il suffit d'avoir l'ensemble des informations nécessaires à la reconstruction de l'image en moins de 40 ms. Ces informations sont obtenues lorsque le réseau fait au moins un tour, ce qui nécessite une vitesse de rotation supérieure à 1500 tr/mn.

Toujours dans le cas de l'écran, la fréquence de l'excitation lumineuse sera de $\frac{P}{40}$ × 1000 Hz pour chacune des fibres 43. On veillera à ce que cette fréquence soit toujours supérieure à 50 Hz, limite en deçà de laquelle le phénomène de "flickering" devient gênant.

Si au lieu de l'oeil humain on utilise comme intégrateur un dispositif permettant d'impressionner un film, la seule contrainte sera alors celle de l'intensité de l'impulsion lumineuse en fonction de la sensibilité du film.

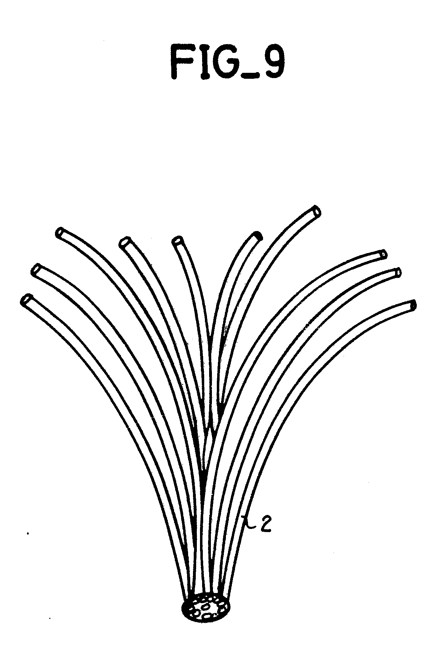

Enfin, un exemple d'utilisation du dispositif d'adressage selon l'invention à des compositions de caractère artistique est représenté à la figure 9. On peut en effet prévoir d'utiliser à des fins décoratives des fibres optiques 2 à diffusion latérale pour constituer par exemple des gerbes de fibres diffusantes ayant la configuration de bouquets de fleurs, ou bien collées par exemple sur un mur afin de servir de support à un message.

Naturellement les réalisations de l'invention décrites précédemment pourront encore subir de nombreuses variantes d'exécution et une modification des dispositifs décrits précédemment pourra consister, par exemple, à mettre en oeuvre des fibres à transfert de fréquences à la place des fibres à diffusion latérale contrôlée, c'est-à-dire des fibres optiques qui sont absorbantes à la longueur d'onde $\lambda_1$ de la source et qui sont luminescentes à une longueur d'onde $\lambda_2 > \lambda_1$. A cet égard des fibres plastiques scintillantes sont commercialement disponibles pour les transferts ultra violet → bleu et bleu → vert. La diversité des colorants luminescents est telle qu'à partir d'une source de faible longueur d'onde (en ultra violet par exemple), toutes les longueurs d'ondes jusqu'à l'infra rouge peuvent être engendrées. Cette dernière particularité pourra être utilement appliquée aux dispositifs de visualisation et de déclaration polychromes.

**Revendications**

1. Dispositif d'adressage optique permettant le déplacement de lignes lumineuses au-dessus de zones déterminées d'une surface (13) et le repérage optique de ces zones caractérisé en ce qu'il comprend un ou plusieurs guides de lumière (2, 12) à diffusion latérale disposé parallèlement à la surface couplés par une extrémité à une source lumineuse (7; 8; 9; 18;

26; 31; 38; 41; 45) et à des moyens de commande (11) pour éclairer sélectivement chaque zone de la surface à l'aide d'au moins un guide de lumière (2).

2. Dispositif selon la revendication 1, caractérisé en ce que les guides de lumière sont disposés en nappe (1) de guides parallèles (2) à la surface.

3. Dispositif selon la revendication 1, caractérisé en ce que la sélection des zones à éclairer sur la surface (13) s'effectue par déplacement d'au moins un guide de lumière (12) parallèlement à la surface (13).

4. Dispositif selon l'une quelconque des revendications 1, 2 et 3 caractérisé en ce que la source lumineuse est un laser (7).

5. Dispositif selon la revendication 4, caractérisé en ce que le faisceau lumineux (6) du lasern est déflechi aux entrées des guides de lumière par un déflecteur (5).

6. Dispositif selon la revendication 4, caractérisé en ce que le laser (26, 31) est déplacé devant les entrées de chacun des guides de lumire pour effectuer l'adressage de chaque guide de lumière.

7. Dispositif selon l'une quelconque des revendications 1, 2 et 3 caractérisé en ce que la source lumineuse est un dispositif type "flying spot" (8).

8. Dispositif selon l'une quelconque des revendications 1, 2 et 3 caractérisé en ce que la source lumineuse est constituée par une barrette (9) d'émetteurs lumineux.

9. Dispositif selon l'une quelconque des revendications 1 à 8 caractérisé en ce que les guides de lumière (2, 12) sont fournis par des fibres optiques à diffusion latérale contrôlée.

10. Dispositif selon l'une quelconque des revendications 1 à 8, caractérisé en ce que les guides de lumière (2, 12) sont formés par des fibres optiques scintillantes.

11. Utilisation du dispositif selon l'une quelconque des revendications 1 à 10 pour la réalisation d'imageurs à photoconducteurs dont l'image latente est révélée par des signaux électriques (21, ..., 26).

12. Utilisation du dispositif selon l'une quelconque des revendications 1 à 10 pour la réalisation d'imageurs à photoconducteurs dont l'image latente est révélée par des signaux optiques (29, 30, 31, 32).

13. Utilisation du dispositif selon l'une quelconque des revendications 1 à 10 pour la réalisation d'écrans (44) pour former des images en imagerie médicale.

14. Utilisation du dispositif selon l'une quelconque des revendications 1 à 10 pour la réalisation d'afficheurs optiques ou d'enseignes lumineuses (33, 39).

15. Utilisation du dispositif selon l'une quelconque des revendications 1 à 10 à des fins décoratives.

0254620

FIG_1-A

LASER 7 → 6 → DEFLECTEUR 5 → 3 → 1 4 2 / COMMANDE D'ADRESSAGE 11

FIG_1-B

3 / 1 4 2 / 8 / COMMANDE D'ADRESSAGE 11

FIG_1-C

9 / 11 / 3 / 1 4 2 / 10

0254620

# FIG_2-A

# FIG_2-B

0254620

# FIG_3

# FIG_4

0254620

# FIG_5

38  37  36  34  35  33

# FIG_6

41  42  39  40

0254620

# FIG_7

40     41     40

42

# FIG_8

44

46

45

43

0254620

# FIG_9

2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | FR-A-2 431 659 (T. MURAKAMI) <br><br> * Page 3, ligne 15 - page 7, ligne 28; figures 1-9 * <br><br> --- | 1,9,14 ,15 | G 02 B 5/16 <br> G 09 F 9/30 |
| A | US-A-4 444 459 (P.E. WOODWELL) <br> * Colonne 2, ligne 56 - colonne 6, ligne 34; figures 1-6 * <br><br> --- | 1,9 | |
| A | US-A-4 172 631 (G.J. YEVICK) <br> * Colonne 2, ligne 21 - colonne 3, ligne 2; figures 1-5 * <br><br> --- | 1,9 | |
| A | IBM TECHNICAL DISCLOSURE BULLETIN, vol. 24, no. 3, août 1981, pages 1347-1348, New York, US; F.M. LAWSON et al.: "Fiber-optic lamp" <br><br> ----- | 1,9 | |

DOMAINES TECHNIQUES RECHERCHES (Int. Cl.4)

G 02 B 5/00
G 02 B 6/00
G 09 F 9/00

Le présent rapport de recherche a été établi pour toutes les revendications

| Lieu de la recherche | Date d'achèvement de la recherche | Examinateur |
|---|---|---|
| LA HAYE | 12-10-1987 | SARNEEL A.P.T. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82